# DEMANDE DE BREVET EUROPEEN

(11) **EP 2 474 407 A1**
(43) Date de publication de la demande: **11.07.2012**
(21) Numéro de dépôt: 12150247.0
(22) Date de dépôt: 05.01.2012
(51) Int. Cl.: B29C 65/08

(54) **Enclume pour dispositif de soudage par ultrasons comprenant au moins une sonotrode**

(30) Priorité: 05.01.2011 FR 1150061
(71) Demandeur: MV 2, 13760 Saint-Cannat (FR)
(72) Inventeur: de Campredon, Jean-Marie, 13090 Aix en Provence (FR); Magnan, Sébastien, 13790 Peynier (FR)
(74) Mandataire: Tetaz, Franck Claude Edouard

(57) **Abrégé**

L'invention concerne une enclume (1) pour un dispositif de soudure par ultrason incluant au moins une sonotrode, l'enclume (1) comprenant au moins un arbre (4) monté à rotation, au moins un anneau (5) porté par l'arbre et adapté pour être déplacé axialement sur l'arbre, et des moyens de serrage pour assurer un positionnement axial de chaque anneau (5).

## Description

### DOMAINE DE L'INVENTION

La présente invention concerne le domaine technique général des dispositifs et procédés pour créer rapidement des cordons de soudure longitudinaux à partir d'au moins une bande de film flexible en utilisant l'énergie à ultrasons pour réaliser les cordons de soudure.

### PRESENTATION DE L'ART ANTERIEUR

Le soudage par ultrason de matériau en bandes consiste à faire passer la ou les bandes à assembler et à les souder entre une sonotrode, animée d'un mouvement vibratoire ultrasonore, et une enclume.

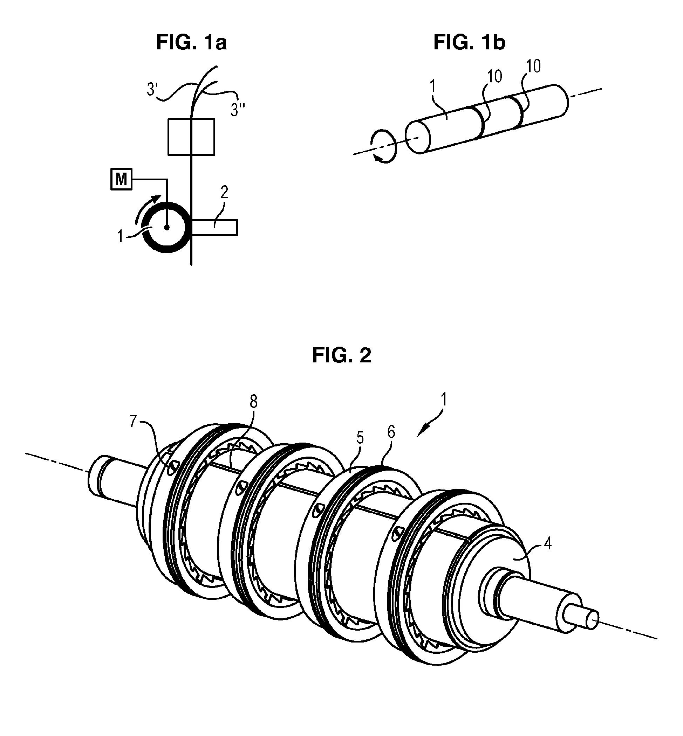

On a illustré aux figures 1a et 1b un exemple d'un tel dispositif de de soudage longitudinal selon l'art antérieur.

Le dispositif comprend un cylindre 1 et une sonotrode 2 disposée en regard du cylindre 1. Ce dispositif permet la réalisation de soudures longitudinales entre deux bandes superposées de matériau 3', 3" - contenant par exemple un matériau thermoplastique - qui sont déroulées de façon continue entre le cylindre 1 et la sonotrode 2.

Le cylindre 1 comprend sur sa face latérale au moins deux enclumes 10 positionnées fixement pour réaliser les soudures longitudinales. Le cylindre 1 est entraîné en rotation à la même vitesse circonférentielle que la vitesse de défilement des bandes 3', 3". Lorsque l'enclume 10 vient en vis-à-vis de la sonotrode 2 par l'intermédiaire des bandes de film 3', 3", celles-ci sont soudées par ultrason selon le motif de l'enclume 10.

Le principal inconvénient du dispositif illustré à la figure 1 est que l'on doit changer le cylindre 1 à chaque fois que la position axiale des cordons de soudure varie, ce qui entraîne des coûts d'outillage importants et également des temps d'immobilisation de la machine.

Un but de la présente invention est de proposer un procédé et un dispositif de réalisation de soudures longitudinales par ultrasons permettant de palier cet inconvénient.

### RESUME DE L'INVENTION

A cet effet l'invention propose une enclume pour un dispositif de soudure par ultrason incluant au moins une sonotrode, remarquable en ce que l'enclume comprend au moins un arbre monté à rotation, au moins un anneau porté par l'arbre et adapté pour être déplacé axialement sur l'arbre, et des moyens de serrage pour assurer un positionnement axial de chaque anneau.

Des aspects préférés mais non limitatifs de l'enclume selon l'invention sont les suivants.

Chaque anneau peut comporter une bague radialement intérieure discontinue et une bague radialement extérieure, les bagues radialement intérieure et extérieure étant coaxiales. Chaque anneau peut également comporter des moyens à complément de forme pour assurer la coopération entre les deux bagues. Dans ce cas, les moyens de serrage sont adaptés pour assurer un serrage sur l'arbre de la bague radialement intérieure. La combinaison de bagues radialement intérieure et extérieure avec des moyens à complément de forme pour la coopération entre les deux bagues permet de garantir un contact optimal entre les deux bagues et entre l'anneau et l'arbre, ce qui permet de réduire le risque de déformation de l'anneau du aux efforts et aux vibrations issus de la sonotrode.

Avantageusement, la bague radialement intérieure peut comporter une fente axiale parallèle à l'axe de rotation de l'arbre. Ceci permet de rendre la bague radialement intérieure flexible radialement.

Dans un mode de réalisation, les moyens à complément de forme comprennent :
- une pluralité de premiers crans sur la face externe de la bague radialement intérieure,
- une pluralité de deuxièmes crans en regard des premiers crans sur la face interne de la bague radialement extérieure,
les premiers et deuxièmes crans étant agencés de sorte qu'un déplacement relatif périphérique de la bague radialement extérieure par rapport à la bague radialement intérieure induit un déplacement radial de la bague radialement intérieure, sans aucun déplacement axial de l'une ou l'autre des bagues. Ceci permet, par une action sur les moyens de serrage, de serrer la bague radialement intérieure sur l'arbre, de sorte à assurer le maintien en position de l'anneau sur l'arbre.

Chaque cran peut présenter au moins une facette dont la génératrice diverge par rapport à une surface cylindrique.

Dans un mode de réalisation, chaque cran consiste en deux facettes :
- une facette radiale s'étendant radialement, et
- une facette inclinée reliant le sommet de la facette radiale à la base de la facette radiale du cran suivant.

Les moyens de serrage peuvent comprendre des moyens aptes à exercer une force sur la bague radialement intérieure selon une direction sensiblement parallèle à une tangente à la bague radialement extérieure. Ces moyens aptes à exercer une force sur la bague radialement intérieure peuvent comprendre au moins une vis et une ouverture taraudée associée dans la bague radialement extérieure, l'ouverture taraudée s'étendant sensiblement parallèlement à une tangente à la bague radialement extérieure.

Les moyens aptes à exercer une force sur la bague radialement intérieure peuvent également comprendre au moins une butée s'étendant radialement sur la bague radialement intérieure.

La bague extérieure peut comprendre un logement destiné à recevoir la butée, le logement présentant une dimension selon une direction circonférentielle de la bague radialement extérieure supérieure à la dimension de la butée selon ladite direction circonférentielle.

L'invention concerne également un dispositif de soudage par ultrason d'au moins une bande de film entrainée par des moyens d'entrainement selon une direction de défilement, le dispositif comprenant au moins une sonotrode, remarquable en ce qu'il comprend en outre au moins une enclume selon l'une des revendications précédentes en regard de la sonotrode.

L'invention concerne également un procédé de soudage par ultrason comprenant une étape consistant à déplacer axialement au moins un anneau porté par un arbre d'un dispositif de soudage par ultrason, et serrer chaque anneau sur l'arbre pour assurer un positionnement axial de chaque anneau.

### BREVE DESCRIPTION DES DESSINS

D'autres avantages et caractéristiques du dispositif et du procédé selon l'invention ressortiront mieux de la description qui va suivre de plusieurs variantes d'exécution, données à titre d'exemples non limitatifs, à partir des dessins annexés sur lesquels :
- les figures 1a et 1b illustrent un dispositif de soudage par ultrason de l'art antérieur ;
- la figure 2 illustre un mode de réalisation d'une enclume selon l'invention ;
- les figures 3 à 5 illustrent un exemple de réalisation d'un anneau de l'enclume selon l'invention ;
- les figures 6 à 10 illustrent des vue en coupe transversales de différents exemples de réalisation de l'anneau.

### DESCRIPTION DETAILLEE DE L'INVENTION

### Généralité sur l'enclume

En référence à la figure 2, on a illustré un mode de réalisation de l'enclume selon l'invention.

Cette enclume comprend :
- un arbre 4 monté à rotation,
- une pluralité d'anneaux 5 portés par l'arbre 4, et
- des moyens de serrage 7 sélectifs des anneaux 5 pour assurer un positionnement axial des anneaux 5 sur l'arbre 4.

Chaque anneau 5 a une forme générale cylindrique de révolution et comprend sur sa face extérieure un bourrelet annulaire 6 qui est au contact d'un des films à souder.

Dans le mode de réalisation illustré à la figure 2, les moyens de serrage 7 comprennent une ouverture taraudée agencée dans chaque anneau 5 et destinée à recevoir une vis de fixation respective.

Le principe de fonctionnement est le suivant. Lorsque l'utilisateur souhaite modifier l'écartement entre deux anneaux 5 adjacents, il desserre la vis de fixation associé à chaque anneau 5. Les anneaux 5 sont ensuite déplacés axialement le long de l'arbre 4 et disposés aux positions désirées par l'utilisateur. Celui-ci serre ensuite de nouveau la vis de fixation de chaque anneau 5 pour maintenir celui-ci en position.

Avantageusement, l'arbre 4 peut comprendre des moyens 8 pour empêcher la rotation des anneaux 5 sur l'arbre. Ceci permet de maintenir les moyens de serrage 7 dans un même plan de l'arbre 4, ce qui facilite l'accès à ces moyens de serrage 7 par l'utilisateur.

Dans un mode de réalisation, les moyens pour empêcher la rotation des anneaux comprennent :
- une rainure 8 creusée sur la face latérale de l'arbre 4 et s'étendant parallèlement à l'axe de rotation de l'arbre 4,
- un pion 9 faisant saillie sur la face intérieure de chaque anneau 5 destiné à s'insérer dans la rainure 8.

### Bague radialement intérieure et extérieure

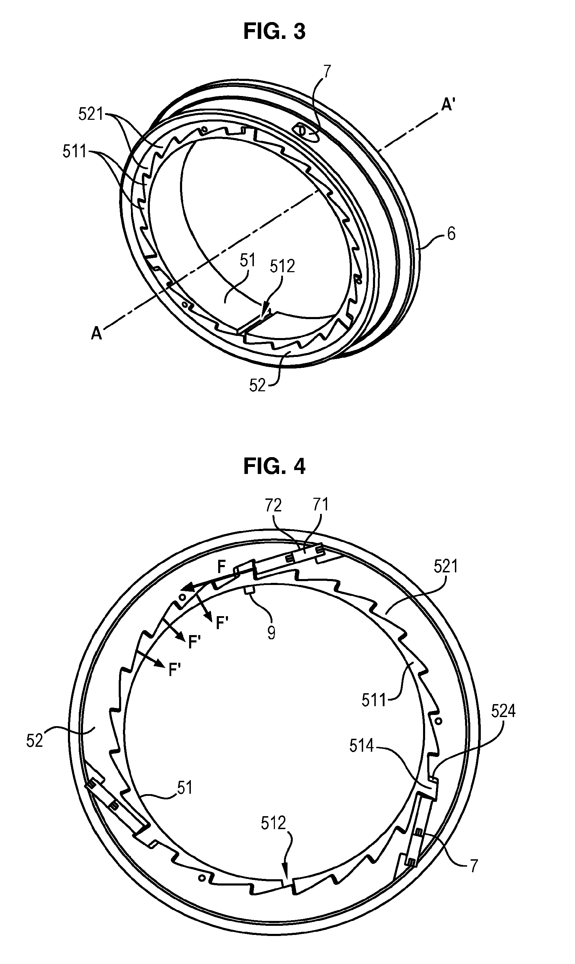

En référence aux figures 3 à 5, on a illustré un mode de réalisation des anneaux 5 illustrés à la figure 1.

Chaque anneau 5 comporte une bague radialement intérieure 51 - dite « bague intérieure » - et une bague radialement extérieure 52 - dite « bague extérieure » - coaxiale à la bague intérieure 51 selon un axe A-A' de révolution de l'anneau 5.

Dans ce mode de réalisation, les moyens de serrage 7 sont adaptés pour assurer un serrage sur l'arbre 4 de la bague intérieure 51.

La bague intérieure 51 est avantageusement discontinue de sorte à pouvoir subir des déplacements radiaux par rapport à l'axe A-A'. Plus précisément, la bague intérieure 51 comporte une fente axiale 512 sensiblement parallèle à l'axe A-A'.

Toutefois, il est bien entendu pour l'homme du métier que la bague intérieure 51 ne se limite pas à la forme particulière illustrée aux figures 3 à 5. Par exemple la bague intérieure 51 peut être constituée sous forme de tronçons de cylindre dont le nombre est variable. La bague intérieure 51 peut notamment être constituée de deux demi cylindres, de tiers de cylindres ou de quart de cylindres, etc.

### Crans des bagues radialement intérieure et extérieure

Chaque bague 51, 52 comprend des moyens à complément de forme 511, 521 pour assurer la coopération entre les deux bagues 51, 52.

Dans le mode de réalisation illustré aux figures 3 à 5, les moyens à complément de forme 511, 521 comprennent une pluralité de premiers crans 511 sur la face externe de la bague intérieure 51. Les moyens à complément de forme 511, 521 comprennent également une pluralité de deuxièmes crans 521 sur la face interne de la bague extérieure 52. Chaque premier cran 511 est en regard d'un deuxième cran 521 respectif. Par ailleurs, les premiers et deuxièmes crans 511, 521 ont des formes complémentaires.

Chaque cran présente au moins une facette dont la génératrice diverge par rapport à une surface cylindrique.

Dans le mode de réalisation illustré aux figures 3 à 5, chaque premier cran 511 (respectivement deuxième cran 521) de la bague intérieure 51 (respectivement bague extérieure 52) comprend deux facettes 513, 515 (respectivement 523, 525). La première facette 513 (respectivement 523) - dite « facette radiale » - s'étend sensiblement selon un rayon de la bague intérieure 51 (respectivement la bague extérieure 52). La deuxième facette 515 (respectivement 525) - dite « facette inclinée » - relie le sommet de la facette radiale 513 (respectivement 523) à la base de la facette radiale 513 (respectivement 523) du cran 511 (respectivement 521) suivant.

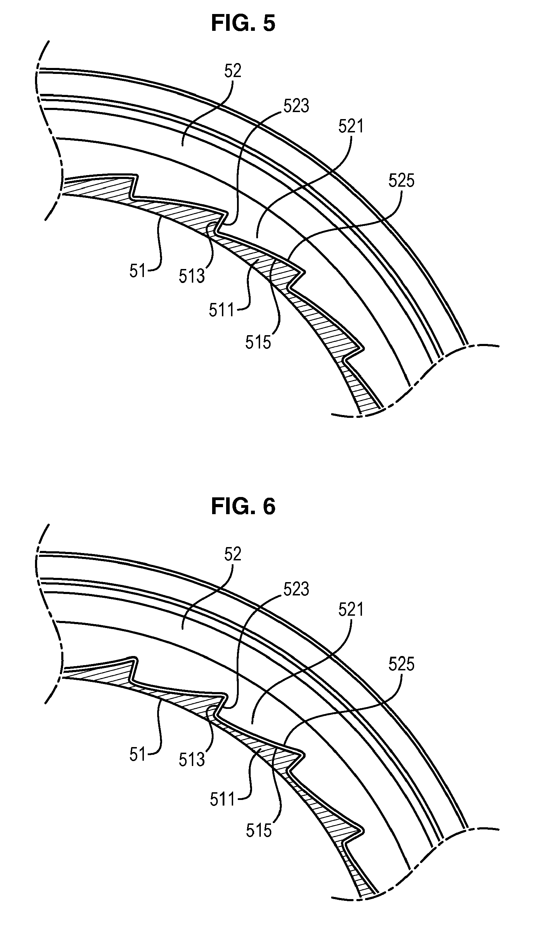

Les facettes inclinées 515, 525 peuvent avoir différentes formes. Dans le mode de réalisation illustré aux figures 3 à 5, chaque facette inclinée 515, 525 s'étend sensiblement selon un cylindre. En variante, la facette inclinée 515, 525 de chaque cran 511, 521 peut être concave ou convexe ou plane ou constituée d'une succession de plans comme illustré aux figures 6 à 9.

Sur la figure 6, chaque premier cran 511 de la bague intérieure 51 comprend une face inclinée 515 concave, la face inclinée 525 du deuxième cran 521 en regard étant convexe.

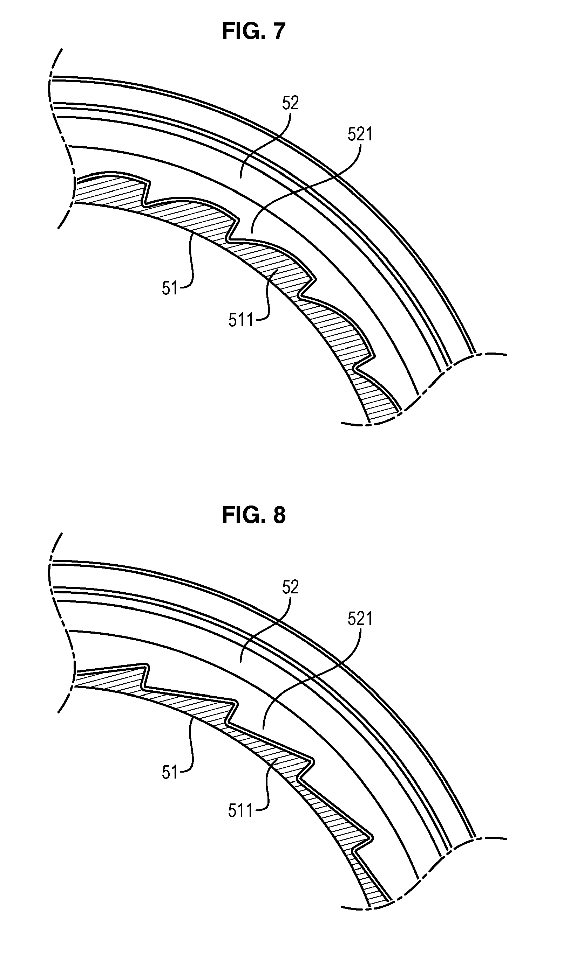

Sur la figure 7, chaque premier cran 511 de la bague intérieure 51 comprend une face inclinée 515 convexe, la face inclinée 525 du deuxième cran 521 en regard étant concave.

Sur la figure 8, chaque premier cran 511 de la bague intérieure 51 comprend une face inclinée 515 plane, la face inclinée 525 du deuxième cran 521 en regard étant également plane.

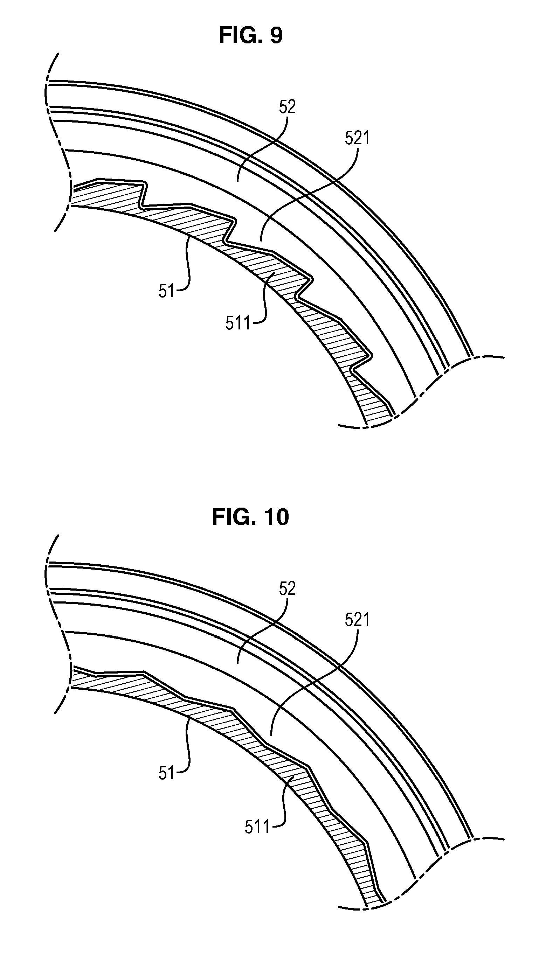

Sur la figure 9, chaque premier cran 511 de la bague intérieure 51 comprend une face inclinée 515 constituée d'au moins un plan, la face inclinée 525 du deuxième cran 521 en regard étant également constituée du même nombre de plans que la face 515.

Il est bien entendu que le nombre de facettes par cran peut être supérieur à deux et que la position des facettes peut varier. Par exemple, dans le mode de réalisation illustré à la figure 10, chaque cran 511, 521 comprend deux facettes 513, 515 et 523, 525 présentant un profil en V selon une coupe transversale.

Quelle que soit la forme, le nombre et la position des premiers et deuxièmes crans 511, 521 des bagues intérieure et extérieure 51, 52, ceux-ci sont agencés de sorte qu'un déplacement relatif périphérique de la bague intérieure 51 par rapport à la bague extérieure 52 induit un déplacement radial de la bague intérieure 51 sans aucun déplacement axial de l'une ou l'autre des deux bagues 51,52.

### Moyens de serrage

Les moyens de serrage 7 comprennent des moyens aptes à appliquer une force F selon une direction sensiblement parallèle à une tangente à la face externe de la bague extérieure 52 (respectivement la face interne de la bague intérieure 51).

Ceci permet d'imprimer un déplacement circonférentiel de la bague extérieure 52 relativement à la bague intérieure 51, de sorte à induire un déplacement radial de la bague intérieure 51 grâce au contact entre les premiers et deuxièmes crans 511, 521.

Dans le mode de réalisation illustré aux figures 3 à 5, les moyens aptes à exercer une force F sur la bague radialement intérieure comprennent trois vis de fixation 71 et trois ouvertures associées 72 s'étendant sur la circonférence de la bague extérieure 52, entre les faces externe et interne de celle-ci. Chaque ouverture 72 s'étend sensiblement parallèlement à une tangente à la bague extérieure 52.

Chaque ouverture 72 comprend un taraudage destiné à coopérer avec le filetage d'une vis de fixation 71 respective. Les ouvertures 72 de la bague extérieures débouchent chacune sur un logement 524 agencé sur la face interne de la bague extérieure 52.

Chaque logement 524 est destiné à recevoir une butée 514 respective de la bague intérieure 51. Dans le mode de réalisation illustré aux figures 3 à 5, la bague intérieure 51 comprend trois butées 514 s'étendant radialement.

Avantageusement, chaque logement 524 présente une dimension selon une direction circonférentielle de la bague extérieure 52 qui est supérieure à la dimension de la butée associée 514 selon ladite direction circonférentielle. Le fait que les dimensions du logement 524 soient plus importantes que celles de la butée 514 (selon une direction circonférentielle) permet un déplacement périphérique de la bague intérieure 51 relativement à la bague extérieure 52.

Le principe de fonctionnement de l'enclume illustrée aux figures 3 à 5 est le suivant.

L'utilisateur positionne les anneaux 5 sur l'arbre 4 aux positions désirées pour ceux-ci, le pion 9 de chaque anneau étant engagé dans la rainure 8 de l'arbre 4. Pour chaque anneau 5, l'utilisateur visse ensuite une par une les vis de fixation 71 dans leur ouverture taraudée associée 72. Lors du vissage d'une vis de fixation, l'extrémité de la vis vient en appui contre sa butée associée 514.

Le déplacement de la vis le long de l'ouverture taraudée 72 induit l'application de la force F sur la butée selon une direction sensiblement parallèle à une tangente à la bague extérieure 52.

Sous l'action de la force F, la bague extérieure 52 se déplace autour de l'axe de rotation de l'arbre. Les facettes inclinées 525 des deuxièmes crans 521 coulissent et appuient sur les facettes inclinées 515 des premiers crans 511 en appliquant une force F' sensiblement radiale et proportionnelle à la force F.

La bague intérieure 51 discontinue se déplace radialement, ce qui induit une diminution de son rayon et donc le serrage de la bague intérieure 51 sur l'arbre 4. L'utilisateur répète cette opération en vissant les différentes vis de fixation de chaque anneau.

L'enclume selon l'invention peut être utilisée avec un dispositif de soudage par ultrason d'au moins une bande de film entrainée par des moyens d'entrainement selon une direction de défilement tel que décrit en référence aux figures 1a à 1 c. Dans ce cas, le dispositif de soudage par ultrason comprend au moins une sonotrode en regard de l'enclume décrite ci-dessus.

L'homme du métier aura compris que de nombreuses modifications peuvent être apportées à l'invention décrite ci-dessus sans sortir matériellement des nouveaux enseignements présentés ici.

Il est donc bien évident que les exemples qui viennent d'être donnés ne sont que des illustrations particulières en aucun cas limitatives.

Par exemple, l'enclume peut comprendre une seule vis de fixation associée à une ouverture taraudée. Par ailleurs, dans le cas où chaque cran comprend une facette s'étendant radialement, la bague intérieure peut être dépourvue de butée (et donc la bague extérieure de logement). Dans ce cas, l'extrémité de la vis de fixation vient en appui directement contre la facette radiale de l'un des crans.

### REFERENCE:

- 1,: cylindre
- 2,: sonotrode
- 3, 3': bandes de film
- 4: arbre
- 5: anneau
- 6: bourrelet annulaire
- 51: bague radialement intérieure
- 52: bague radialement extérieure
- 511, 521: crans
- 512: fente axiale
- 513, 523: facette radiale
- 514: butée
- 524: logement
- 515, 525: facette inclinée
- 7: moyen de serrage
- 71: vis
- 72: ouverture
- 8: rainure
- 9: pion

## Revendications

1. Enclume (1) pour un dispositif de soudure par ultrason incluant au moins une sonotrode, **caractérisée en ce que** l'enclume (1) comprend au moins un arbre (4) monté à rotation, au moins un anneau (5) porté par l'arbre et adapté pour être déplacé axialement sur l'arbre, et des moyens de serrage pour assurer un positionnement axial de chaque anneau (5).

2. Enclume selon la revendication 1, dans laquelle chaque anneau (5) comporte une bague radialement intérieure discontinue (51) et une bague radialement extérieure (52), les bagues radialement intérieure et extérieure étant coaxiales, et des moyens à complément de forme (511, 521) pour assurer la coopération entre les deux bagues (51, 52), les moyens de serrage étant adaptés pour assurer un serrage sur l'arbre de la bague radialement intérieure.

3. Enclume selon l'une des revendications 1 ou 2, dans laquelle les moyens à complément de forme comprennent:
- une pluralité de crans (511) sur la face externe de la bague radialement intérieure,
- une pluralité de crans (521) en regard sur la face interne de la bague radialement extérieure,
les crans étant agencés de sorte qu'un déplacement relatif circonférentiel de la bague radialement extérieure par rapport à la bague radialement intérieure induit un déplacement radial de la bague radialement intérieure.

4. Enclume selon la revendication 3, dans laquelle chaque cran présente au moins une facette dont les génératrices divergent par rapport à une surface cylindrique ayant pour axe l'axe de l'anneau.

5. Enclume selon l'une des revendications 3 ou 4, dans laquelle chaque cran consiste en deux facettes, une facette radiale (513, 523) s'étendant radialement, et une facette inclinée reliant le sommet de la facette radiale à la base de la facette radiale du cran suivant.

6. Enclume selon l'une des revendications 2 à 5, dans laquelle les moyens de serrage comprennent des moyens aptes à exercer une force (F) sur la bague radialement intérieure selon une direction sensiblement parallèle à une tangente à la bague radialement extérieure.

7. Enclume selon la revendication 6, dans laquelle les moyens aptes à exercer une force (F) sur la bague radialement intérieure comprennent au moins une vis (71) et une ouverture taraudée (72) associée dans la bague radialement extérieure (52), l'ouverture taraudée (72) s'étendant sensiblement parallèlement à une tangente à la bague radialement extérieure (52).

8. Enclume selon les revendications 6 ou 7, dans laquelle les moyens aptes à exercer une force (F) sur la bague radialement intérieure comprennent une butée (514) de la bague radialement intérieure s'étendant radialement.

9. Enclume selon les revendications 1 et 8, dans laquelle la bague extérieure (52) comprend un logement (524) destiné à recevoir la butée (514), le logement présentant une dimension selon une direction circonférentielle de la bague radialement extérieure (52) supérieure à la dimension de la butée selon ladite direction circonférentielle.

10. Dispositif de soudage par ultrason d'au moins une bande de film entrainée par des moyens d'entrainement selon une direction de défilement, le dispositif comprenant au moins une sonotrode, **caractérisé en ce qu'**il comprend en outre au moins une enclume (1) selon l'une des revendications précédentes en regard de la sonotrode.

11. Procédé de soudage par ultrason comprenant une étape consistant à déplacer axialement au moins un anneau (5) porté par au moins un arbre (4) d'un dispositif de soudage par ultrason, et serrer chaque anneau (5) sur l'arbre (4) pour assurer un positionnement axial de chaque anneau (5).
